# EUROPÄISCHE PATENTANMELDUNG

(11) **EP 4 838 113 A1**
(43) Veröffentlichungstag der Anmeldung: **11.11.2026**
(21) Anmeldenummer: 26172550.1
(22) Anmeldetag: 15.04.2026
(51) Int. Cl.: F16H 25/20, B23P 19/02, F16H 25/22

(54) **FÜGEMODUL MIT EINER DREHMOMENTSTÜTZEINRICHTUNG SOWIE VERFAHREN ZUR FERTIGUNG EINES SOLCHEN FÜGEMODULS MIT EINER DREHMOMENTSTÜTZEINRICHTUNG**

(30) Priorität: 09.05.2025 EP 25175465
(71) Anmelder: Kistler Holding AG, 8408 Winterthur (CH)
(72) Erfinder: Schneider, Jochen, 73614 Schorndorf (DE); Liu, Chang, 73072 Donzdorf (DE)

(57) **Zusammenfassung**

Die Erfindung betrifft ein Fügemodul (1) mit einer Drehmomentstützeinrichtung (16); welches Fügemodul (1) eine Antriebseinheit (11), einen Gewindetrieb (12), einen Stössel (13) und ein Gehäuse (14) aufweist; welcher Gewindetrieb (12) eine Drehbewegung der Antriebseinheit (11) in eine Linearbewegung wandelt; welcher Stössel (13) am Gewindetrieb (12) angebracht ist und mit der Linearbewegung entlang einer Längsachse (X) verfahrbar ist; welche Drehmomentstützeinrichtung (16) mindest4ens eine Führungsnut (16.1) und mindestens ein Führungselement (16.2) aufweist; welche Führungsnut (16.1) im Gehäuse (14) angebracht ist, welches Führungselement (16.2) drehfest mit dem Stössel (13) verbunden ist und welches Führungselement (16.2) bereichsweise in die Führungsnut (16.1) ragt; wobei die Führungsnut (16.1) einen Nutenkörper (16.11, 16.11') und mindestens eine Nuteneinlage (16.12, 16.12') aufweist, und wobei das in die Führungsnut (16.1) ragende Führungselement (16.2) in einem direkten mechanischen Kontakt (C, C') mit der Nuteneinlage (16.12, 16.12') ist, welcher direkte mechanische Kontakt (C, C') eine Rotation des Stössels (13) um die Längsachse (X) verhindert.

## Beschreibung

### Technisches Gebiet

Die Erfindung betrifft ein Fügemodul mit einer Drehmomentstützeinrichtung sowie ein Verfahren zur Fertigung eines solchen Fügemoduls mit einer Drehmomentstützeinrichtung nach den Oberbegriffen der unabhängigen Ansprüche.

### Stand der Technik

Fügemodule werden in der industriellen Fertigung für vielfältige Montage- und Fügeprozesse wie Prägen, Stanzen, Nieten, Clinchen, usw. eingesetzt. Mit einem Fügemodul wird ein bei einem Montage- und Fügeprozess benötigtes Werkzeug in ein Werkstück verfahren und eine für den Montage- und Fügeprozess benötigte Kraft aufgebracht. Es gibt Fügemodule als elektromechanische -, pneumatische - oder hydraulische Module. Die Anmelderin fertigt und vertreibt elektromechanische Fügemodule, wie sie in der unter wwww.kistler.com auffindbaren Broschüre 960-283e-09.24.pdf beschreiben sind.

Ein solches elektromechanisches Fügemodul weist einen Antrieb, einen Gewindetrieb, einen Stössel und einen Kraftaufnehmer auf. Der Antrieb ist mit dem Gewindetrieb in Wirkverbindung und eine Drehbewegung des Antriebes wird vom Gewindetrieb in eine Linearbewegung gewandelt. Der Stössel und der Kraftaufnehmer sind am Gewindetrieb angebracht und werden mit der Linearbewegung entlang einer Längsachse verfahren. Der Stössel trägt das Werkzeug oder Werkstück. Über den Stössel wird die benötigte Kraft aufgebracht. Der Kraftaufnehmer misst die aufgebrachte Kraft und erzeugt für die gemessene Kraft Messdaten.

Für eine industrielle Fertigung von hoher Präzision weist ein Fügemodul eine Hublänge von mehreren 100 mm, eine grosse Verfahrgeschwindigkeit von bis zu 800 mm/s, eine hohe Taktzeit von über 10 Hübe/min und eine hohe Wiederholgenauigkeit von 0.01 mm auf. Das Fügemodul ist für eine lange Lebensdauer mit über 10⁶ Hüben ausgelegt. Bei der Linearbewegung von Gewindetrieb und Stössel gilt es eine Rotation um die Längsachse zu vermeiden. Denn eine solche Rotation führt je nach Montage- und Fügeprozess zu einer fehlerhaften radialen Ausrichtung von Werkzeug und Werkstück. Auch führt eine solche Rotation zu einer ungenauen linearen Ausrichtung von Werkzeug und Werkstück, da die lineare Ausrichtung aus der Winkelposition des Antriebes abgeleitet wird. Dazu weist das Fügemodul eine Drehmomentstützeinrichtung auf.

Eine erste Aufgabe der vorliegenden Erfindung ist es, ein Fügemodul mit einer Drehmomentstützeinrichtung bereitzustellen, welche Drehmomentstützeinrichtung bei der Linearbewegung von Gewindetrieb und Stössel eine Rotation um die Längsachse vermeidet und welche Drehmomentstützeinrichtung im Unterhalt weitgehend wartungsfrei und somit verschleissarm und kostengünstig ist. Als zweite Aufgabe soll die Erfindung ein kostengünstiges Verfahren zur Fertigung eines solchen Fügemoduls mit einer Drehmomentstützeinrichtung aufzeigen.

### Darstellung der Erfindung

Diese Aufgaben werden durch die Merkmale der unabhängigen Ansprüche gelöst.

Die Erfindung betrifft ein Fügemodul mit einer Drehmomentstützeinrichtung; welches Fügemodul eine Antriebseinheit, einen Gewindetrieb, einen Stössel und ein Gehäuse aufweist; welcher Gewindetrieb eine Drehbewegung der Antriebseinheit in eine Linearbewegung wandelt; welcher Stössel am Gewindetrieb angebracht ist und mit der Linearbewegung entlang einer Längsachse verfahrbar ist; welche Drehmomentstützeinrichtung mindestens eine Führungsnut und mindestens ein Führungselement aufweist; welche Führungsnut im Gehäuse angebracht ist, welches Führungselement drehfest mit dem Stössel verbunden ist und welches Führungselement bereichsweise in die Führungsnut ragt; wobei die Führungsnut einen Nutenkörper und mindestens eine Nuteneinlage aufweist, und wobei das in die Führungsnut ragende Führungselement in einem direkten mechanischen Kontakt mit der Nuteneinlage ist, welcher direkte mechanische Kontakt eine Rotation des Stössels um die Längsachse verhindert.

Die Erfindung betrifft auch ein Verfahren zur Fertigung eines Fügemodul mit einer Drehmomentstützeinrichtung (16); welches Fügemodul eine Antriebseinheit, einen Gewindetrieb, einen Stössel und ein Gehäuse aufweist; welcher Gewindetrieb eine Drehbewegung der Antriebseinheit in eine Linearbewegung wandelt; welcher Stössel am Gewindetrieb angebracht ist und mit der Linearbewegung entlang einer Längsachse verfahrbar ist; welche Drehmomentstützeinrichtung mindestens eine Führungsnut und mindestens ein Führungselement aufweist; welche Führungsnut im Gehäuse angebracht ist, welches Führungselement drehfest mit dem Stössel verbunden ist und welches Führungselement bereichsweise in die Führungsnut ragt; wobei mindestens eine Nuteneinlage bereitgestellt wird; und wobei die Nuteneinlage derart in die Führungsnut eingelegt wird, dass das in die Führungsnut ragende Führungselement in einem direkten mechanischen Kontakt mit der Nuteneinlage ist, welcher direkte mechanische Kontakt eine Rotation des Stössels um die Längsachse verhindert.

Das mit dem Stössel verbundene Führungselement steht bei der Linearbewegung des Stössels im direkten mechanischen Kontakt mit einer Nuteneinlage der Führungsnut. Diese Nuteneinlage minimiert einen Verschleiss der Führungsnut aufgrund der Linearbewegung des Führungselementes. Und da die Führungsnut im Gehäuse angebracht ist, verhindert der direkte mechanische Kontakt eine Rotation des Führungselementes und somit des Stössels um die Längsachse. Dadurch ist die Drehmomentstützeinrichtung verschleissarm und im Unterhalt weitgehend wartungsfrei und kostengünstig.

Die erfindungsgemässe Nuteneinlage lässt sich einfach und rasch in die Führungsnut einlegen. Dadurch ist die Fertigung der Drehmomentstützeinrichtung des Fügemodules kostengünstig.

Vorteilhafte Weiterbildungen der Erfindung sind in den abhängigen Ansprüchen geschützt.

### Kurze Beschreibung der Zeichnungen

Im Folgenden wird die Erfindung beispielhaft unter Beizug der Figuren näher erklärt. Es zeigen
- Fig. 1: einen Querschnitt durch einen Teil eines Fügemodules 1 mit einer Drehmomentstützeinrichtung 16;
- Fig. 2: ein erster vergrösserter Ausschnitt B1 des Querschnittes des Fügemodules 1 mit der Drehmomentstützeinrichtung 16 gemäss Fig. 1;
- Fig. 3: eine Darstellung entlang eines Schnittverlaufes A - A eines Teiles des Fügemodules 1 mit der Drehmomentstützeinrichtung 16 gemäss Fig. 2; und
- Fig. 4: ein zweiter vergrösserter Ausschnitt B2 des Schnittverlaufes A - A des Fügemodules 1 mit der Drehmomentstützeinrichtung 16 gemäss Fig. 3.

Gleiche Bezugszeichen bezeichnen in den Figuren gleiche Gegenstände.

### Wege zur Ausführung der Erfindung

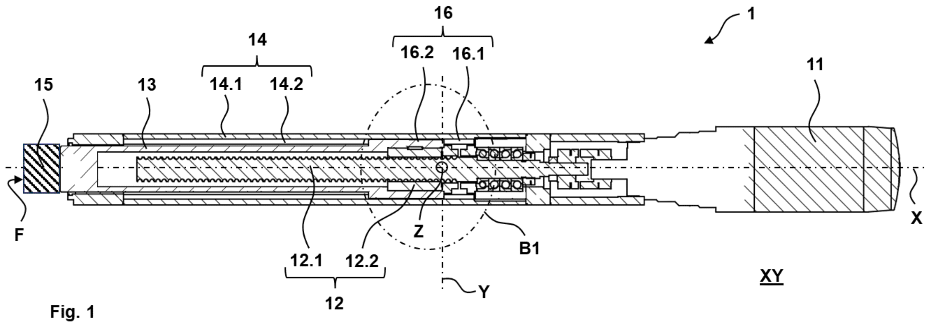

Die Fig. 1 zeigt einen Teil eines Fügemodules 1 in einem Querschnitt. Das Fügemodul 1 ist in einem Koordinatensystem mit drei Achsen X, Y, Z dargestellt. Die drei Achsen X, Y, Z stehen senkrecht aufeinander. Die drei Achsen X, Y, Z umfassen eine Längsachse X, eine Querachse Y und eine Vertikalachse Z. Der Querschnitt ist in einer von der Längsachse X und der Querachse Y aufgespannten Querebene XY dargestellt.

Das Fügemodul 1 weist eine Antriebseinheit 11, einen Gewindetrieb 12, einen Stössel 13 und ein Gehäuse 14 auf.

Die Antriebseinheit 11 hat die Funktion, den Stössel 13 zu verfahren und über den Stössel 13 eine Kraft F aufzubringen. Mit der Kraft F erfolgt im Rahmen einer industriellen Fertigung ein Montage- und Fügeprozess wie Prägen, Stanzen, Nieten, Clinchen, usw. Vorteilhafterweise weist die Antriebseinheit 11 einen Motor, eine Bremse und eine Steuereinheit auf. Ein Fügemodul 1 mit einem elektrischen Antriebseinheit 11 zeichnet sich durch hohe Energieeffizienz aus.

Die Antriebseinheit 11 ist mit dem Gewindetrieb 12 in Wirkverbindung. Der Gewindetrieb 12 hat die Funktion, eine Drehbewegung der Antriebseinheit 11 in eine Linearbewegung zu wandeln. Dazu weist der Gewindetrieb 12 eine Spindel 12.1 und eine Spindelmutter 12.2 auf. Die Spindel 12.1 und die Spindelmutter 12.2 sind aus einem mechanisch beständigen Werkstoff wie Stahl, Edelstahl, Gusseisen, usw. Die Spindel 12.1 und die Spindelmutter 12.2 verfügen über zueinander passende Gewindegänge. Die Spindelmutter 12.2 sitzt auf der Spindel 12.1. Die Spindel 12.1 ist drehfest mit der Antriebseinheit 11 verbunden. Der Verbindung der Spindel 12.1 mit der Antriebseinheit 11 erfolgt über geeignete Mittel wie Schrauben, Presspassung, usw. Die Drehbewegung der Antriebseinheit 11 bewirkt eine Linearbewegung der Spindelmutter 12.2. Die Linearbewegung erfolgt entlang der Längsachse X. Eine Hublänge des Fügemodules 1 kann mehrere 100 mm betragen.

Der Stössel 13 hat die Funktion, ein beim Montageund Fügeprozess benötigtes Werkzeug oder Werkstück zu tragen. Das Werkzeug oder Werkstück ist figürlich nicht dargestellt. Das Werkzeug oder Werkstück ist mit dem Stössel 13 verbunden. Die Verbindung des Werkzeugs oder Werkstücks mit dem Stössel 13 erfolgt über geeignete Mittel wie Schrauben, Einspannung, usw.

Der Stössel 13 ist aus einem mechanisch beständigen Werkstoff wie Stahl, Edelstahl, Gusseisen, usw. Der Stössel 13 ist am Gewindetrieb 12 angebracht. Der Stössel 13 ist an einer von der Spindel 12.1 abgewandten Seite der Spindelmutter 12.2 angeordnet. Der Stössel 13 ist mit der Spindelmutter 12.2 verbunden. Die Verbindung des Stössels 13 mit der Spindelmutter 12.2 erfolgt über geeignete Mittel wie Schrauben, Presspassung, Klebstoff, usw. Somit werden der Stössel 13 und die Spindelmutter 12.2 gemeinsam in einer Linearbewegung entlang der Längsachse X verfahren. Durch die Linearbewegung ist das vom Stössel 13 getragene Werkzeug oder Werkstück über eine definierte Hublänge des Fügemodules 1 verfahrbar und der Stössel 13 bringt die für den Montage- und Fügeprozess benötigte Kraft F auf.

Das Fügemodul 1 weist einen Kraftaufnehmer 15 auf. Der Kraftaufnehmer 15 hat die Funktion, die über den Stössel 13 aufgebrachte Kraft F zu messen. Der Kraftaufnehmer 15 ist an einem von der Antriebseinheit 11 abgewandten Ende des Stössels 13 angeordnet. Der Kraftaufnehmer 15 ist mit dem Stössel 13 verbunden. Die Verbindung des Kraftaufnehmers 15 mit dem Stössel 13 erfolgt über geeignete Mittel wie Schrauben, Presspassung, Klebstoff, usw. Der Kraftaufnehmer 15 kann ein Dehnungsmessstreifen oder ein piezoelektrischer Sensor sein. Der Kraftaufnehmer 15 ist nicht auf die Messung einer Kraft F eingeschränkt. Er kann auch ein über den Stössel 13 aufgebrachtes Moment wie ein Biegemoment, ein Drehmoment, usw. messen. Er kann die Kraft F über mehrere Grössenordnungen messen.

Das Gehäuse 14 hat die Funktion, den Gewindetrieb 12 und den Kraftaufnehmer 15 vor schädlichen Umwelteinflüssen wie Verunreinigungen (Staub, Feuchtigkeit, usw.) zu schützen. Solche Verunreinigungen können die Funktionsfähigkeit des Fügemodules 1 beeinträchtigen. Das Gehäuse 14 weist einen Gehäusekörper 14.1 aus einem mechanisch beständigen Werkstoff wie Aluminium, Stahl, Edelstahl, usw. Vorteilhafterweise ist der Gehäusekörper 14.1 ein Strangpressprofil aus Aluminium, Aluminiumlegierungen usw. Das Gehäuse 14 ist hohlzylinderförmig und weist einen Hohlraum 14.2 auf. Der Gewindetrieb 12 und der Kraftaufnehmer 15 befinden sich im Hohlraum 14.2. Das Gehäuse 15 umschliesst den Gewindetrieb 12 und den Kraftaufnehmer 15 radial. Das Gehäuse 14 weist eine erste Öffnung und eine zweite Öffnung auf. Durch die erste Öffnung ragt die Antriebseinheit 11 in das Gehäuse 14. Durch die zweite Öffnung ragt das von der Antriebseinheit 11 abgewandten Ende des Stössels 13 aus dem Gehäuse 14. Die erste Öffnung und die zweite Öffnung sind über geeignete Mittel wie Dichtringe, usw. gegen ein Eindringen von Verunreinigungen in den Hohlraum 14.2 abgedichtet.

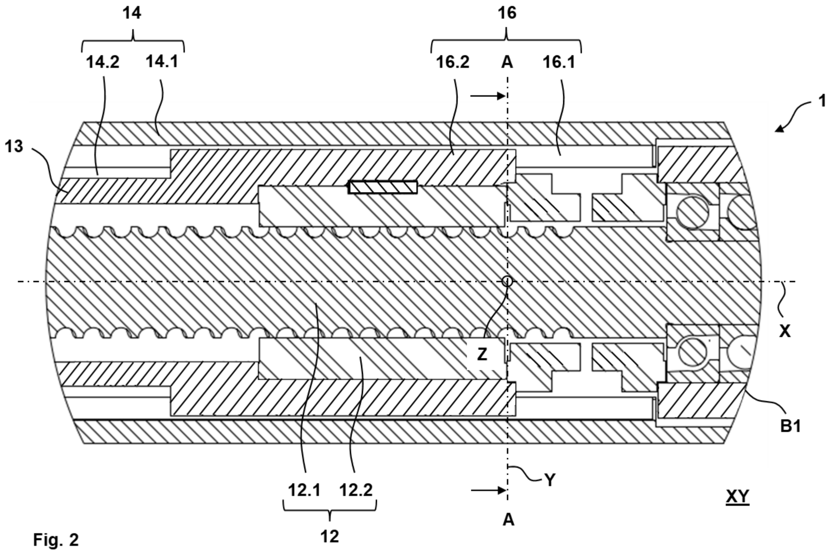

Das Fügemodul 1 weist eine Drehmomentstützeinrichtung 16 auf. Die Drehmomentstützeinrichtung 16 hat die Funktion, bei der Linearbewegung von Spindelmutter 12.1 und Stössel 13 entlang der Längsachse X eine Rotation des Stössels 13 um die Längsachse X zu vermeiden. Die Fig. 2 bis 4 zeigen Details zur Drehmomentstützeinrichtung 16.

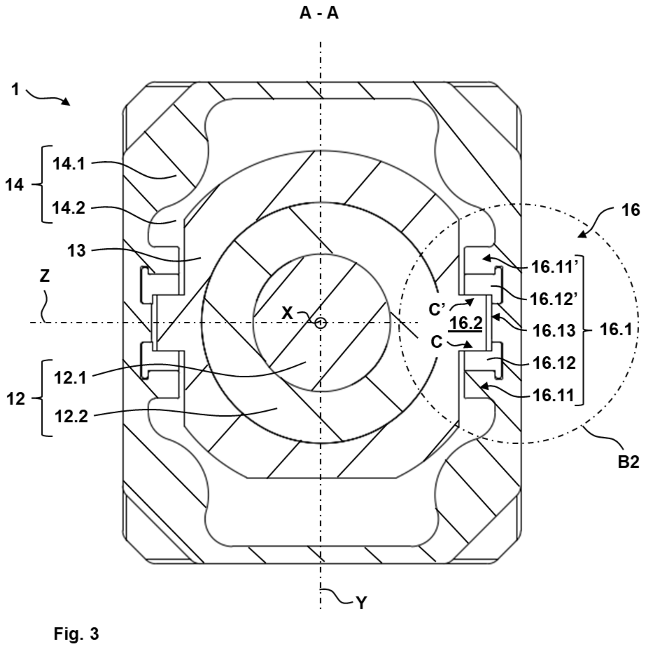

Die Drehmomentstützeinrichtung 16 weist mindestens ein Führungselement 16.2 und mindestens eine Führungsnut 16.1 auf. In der Darstellung gemäss Fig. 3 weist die Drehmomentstützeinrichtung 16 zwei Führungselemente 16.2 und zwei Führungsnuten 16.1 auf. Die zwei Führungselemente 16.2 und die zwei Führungsnuten 16.1 umfassen ein linkes und ein rechtes Führungselement 16.2 sowie eine linke und ein rechte Führungsnut 16.1. Die zwei Führungselemente 16.2 und die zwei Führungsnuten 16.1 sind symmetrisch bezüglich der Querachse Y angeordnet. Die zwei Führungselemente 16.2 und die zwei Führungsnuten 16.1 liegen auf der Vertikalachse Z. Die zwei Führungselemente 16.2 und die zwei Führungsnuten 16.1 sind um die Längsachse X in einem Winkel von 180° zueinander beabstandet. Aus Gründen der Übersichtlichkeit sind in Fig. 3 nur das rechte Führungselement 16.2 und die rechte Führungsnut 16.1 mit Bezugszeichen versehen.

Die Führungsnut 16.1 ist im Gehäuse 14 angebracht. Vorteilhafterweise wird die Führungsnut 16.1 bei der Fertigung des Gehäuses 14 durch Strangpressen im Gehäuse 14 angebracht. Vorteilhafterweise erstreckt sich die Führungsnut 16.1 über die gesamte Hublänge des Fügemodules 1 parallel zur Längsachse X.

Die Führungsnut 16.1 weist einen Nutenkörper 16.11, 16.11' auf. Vorteilhafterweise sind der Gehäusekörper 14.1 und der Nutenkörper 16.11, 16.11' einstückig ausgebildet. Vorteilhafterweise werden der Gehäusekörper 14.1 und der Nutenkörper 16.11, 16.11' als Strangpressprofil gefertigt.

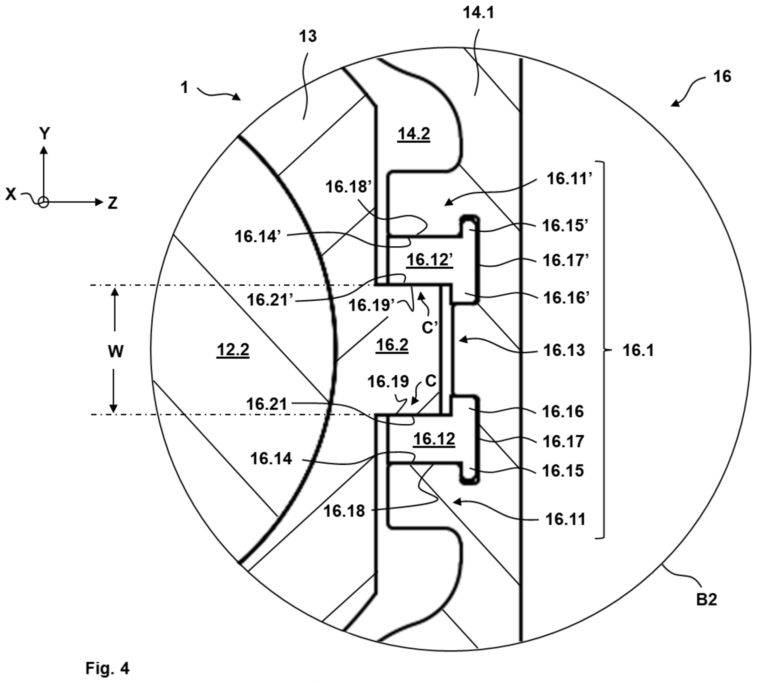

Der Nutenkörper 16.11, 16.11' umschliesst einen Nutenraum 16.13 bereichsweise. Vorteilhafterweise ist der Nutenkörper 16.11, 16.11' U-förmig ausgebildet und umfasst einen ersten Schenkel 16.11 und einen zweiten Schenkel 16.11'. Die beiden Schenkel 16.11, 16.11' ragen in den Hohlraum 14.2. Gemäss Fig. 3 und 4 befindet sich der Nutenraum 16.13 parallel zur Querachse Y zwischen den beiden Schenkeln 16.11, 16.11'.

Die Führungsnut 16.1 weist mindestens eine Nuteneinlage 16.12, 16.12' auf. Vorteilhafterweise ist die Nuteneinlage 16.12, 16.1'' aus einem Werkstoff mit niedrigem Reibwert, welcher Werkstoff einer der Folgenden ist: Polyoxymethylen (POM), Polyethylenterephthalat (PET), Polyetheretherketon (PEEK), Polytetrafluorethylen (PTFE). Bei Kenntnis der vorliegenden Erfindung kann der Fachmann auch andere bekannte Werkstoffe mit niedrigem Reibwert verwenden.

Vorteilhafterweise erstreckt sich die Nuteneinlage 16.12, 16.12' über die gesamte Hublänge des Fügemodules 1 parallel zur Längsachse X.

Die Nuteneinlage 16.12, 16.12' ist mit dem Nutenkörper 16.11, 16.11' verbunden. Gemäss Fig. 3 und 4 weist die Führungsnut 16.1 zwei Nuteneinlagen 16.12, 16.12' auf. Die Nuteneinlagen 16.12, 16.12' umfassen eine erste Nuteneinlage 16.12 und eine zweite Nuteneinlage 16.12'. Die erste Nuteneinlage 16.12 ist mit dem ersten Schenkel 16.11 verbunden und die zweite Nuteneinlage 16.12' ist mit dem zweiten Schenkel 16.11' verbunden.

Die Verbindung der Nuteneinlage 16.12, 16.12' mit dem Nutenkörper 16.11, 16.11' erfolgt über mindestens eine der folgenden Verbindungsarten: Formschluss, Stoffschluss, Kraftschluss, Form- und Stoffschluss, Form- und Kraftschluss, Stoff- und Kraftschluss, Form-, Stoff- und Kraftschluss.

Vorteilhafterweise ist die Nuteneinlage 16.12, 16.12' über einen Formschluss mit dem Nutenkörper 16.11, 16.11' verbunden. Die Nuteneinlage 16.12, 16.12' weist mindestens ein Formschlusselement 16.15, 16.15', 16.16, 16.16' auf und der Nutenkörper 16.11, 16.11' weist mindestens ein komplementäres Formschlusselement 16.17, 16.17' auf. Gemäss Fig. 4 umfasst das Formschlusselement 16.15, 16.15', 16.16, 16.16' ein erstes Formschlusselement 16.15, 16.15' und ein zweites Formschlusselement 16.16, 16.16'. Das erste Formschlusselement 16.15, 16.15' wiederum umfasst ein erstes erstes Formschlusselement 16.15 und ein zweites erstes Formschlusselement 16.15'. Und auch das zweite Formschlusselement 16.16, 16.16' umfasst wiederum ein erstes zweites Formschlusselement 16.16 und ein zweites zweites Formschlusselement 16.16'. Das erste erste Formschlusselement 16.15 und das erste zweite Formschlusselement 16.16 sind in der erste Nuteneinlage 16.12 ausgebildet. Das zweite erste Formschlusselement 16.15' und das zweite zweite Formschlusselement 16.16' sind in der zweiten Nuteneinlage 16.12' ausgebildet. Das komplementäre Formschlusselement 16.17, 16.17' umfasst ein erstes komplementäres Formschlusselement 16.17 und ein zweites komplementäres Formschlusselement 16.17'. Das erste komplementäre Formschlusselement 16.17 ist im ersten Schenkel 16.11 ausgebildet. Das zweite komplementäre Formschlusselement 16.17' ist im zweiten Schenkel 16.11' ausgebildet. Aus Gründen der Übersichtlichkeit sind das Formschlusselement 16.15, 16.15', 16.16, 16.16' und das komplementäre Formschlusselement 16.17, 16.17' nur in Fig. 4 mit Bezugszeichen versehen.

Gemäss Fig. 3 und 4 ist die Nuteneinlage 16.12, 16.12' als T-förmiges Band ausgebildet. Das T-förmige Band weist zwei Arme und einen Fuss auf. Die zwei Arme umfassen einen ersten Arm und einen zweiten Arm. Der erste Arm erstreckt sich parallel zur Querachse Y zum Nutenkörper 16.11, 16.11' hin, der zweite Arm erstreckt sich parallel zur Querachse Y zum Nutenraum 16.13 hin. Das erste Formschlusselement 16.15. 16.15' ist am ersten Arm ausgebildet. Das zweite Formschlusselement 16.16, 16.16' ist am zweiten Arm ausgebildet. In der erste Nuteneinlage 16.12 ist das erste erste Formschlusselement 16.15 am ersten Arm ausgebildet und das erste zweite Formschlusselement 16.16 ist am zweiten Arm ausgebildet. In der zweiten Nuteneinlage 16.12' ist das zweite erste Formschlusselement 16.15' am ersten Arm ausgebildet und das zweite zweite Formschlusselement 16.16' ist am zweiten Arm ausgebildet.

Das komplementäre Formschlusselement 16.17, 16.17' ist eingerichtet, das Formschlusselement 16.15, 16.15', 16.16, 16.16' formschlüssig aufzunehmen. Gemäss Fig. 3 und 4 ist das komplementäre Formschlusselement 16.17, 16.17' im Nutenkörper 16.11, 16.11' pfannenförmig ausgebildet. Die Pfanne erstreckt sich parallel zur Querachse Y. Die Abmessungen der Pfanne im Nutenkörper 16.11, 16.11' sind auf die Abmessungen der Arme der T-förmigen Nuteneinlage 16.12, 16.12' abgestimmt. Das erste komplementäre Formschlusselement 16.17 im ersten Schenkel 16.11 ist eingerichtet, das erste erste Formschlusselement 16.15 und das erste zweite Formschlusselement 16.16 der ersten Nuteneinlage 16.12 aufzunehmen. Das zweite komplementäre Formschlusselement 16.17' im zweiten Schenkel 16.11' ist eingerichtet, das zweite erste Formschlusselement 16.15' und das zweite zweite Formschlusselement 16.16' der zweiten Nuteneinlage 16.12' aufzunehmen.

Bei Kenntnis der vorliegenden Erfindung kann der Fachmann die Ausbildung der Formschlusselemente auch anders gestalten und beispielsweise das komplementäre Formschlusselement T-förmig ausbilden und das Formschlusselement pfannenförmig ausbilden.

Vorteilhafterweise wird die Nuteneinlage 16.12, 16.12' in den Nutenraum 16.13 eingelegt und durch Einschieben des Formschlusselementes 16.15, 16.15', 16.16, 16.16' in das komplementäre Formschlusselement 16.17, 16.17' formschlüssig mit dem Nutenkörper 16.11, 16.11' verbunden.

Der Fuss der als T-förmiges Band ausgebildeten Nuteneinlage 16.12, 16.12' weist zwei Oberflächen 16.18, 16.18', 16.19, 16.19' auf. Die zwei Oberflächen 16.18, 16.18', 16.19, 16.19' umfassen eine erste Oberfläche 16.18, 16.18' und eine zweite Oberfläche 16.19, 16.19'. Die erste Oberfläche 16.18, 16.18' ist parallel zur Querachse Y zum Nutenkörper 16.11, 16.11' hin ausgerichtet. Die zweite Oberfläche 16.19, 16.19' ist parallel zur Querachse Y zum Nutenraum 16.13 hin ausgerichtet. Die zwei Oberflächen 16.18, 16.18', 16.19, 16.19' erstrecken sich in einer Ebene parallel zur Längsachse X und parallel zur Vertikalachse Z. Aus Gründen der Übersichtlichkeit sind die zwei Oberflächen 16.18, 16.18', 16.19, 16.19' nur im vergrösserten Ausschnitt B2 gemäss Fig. 4 mit Bezugszeichen versehen dargestellt.

Die formschlüssig mit dem Nutenkörper 16.11, 16.11' verbundene Nuteneinlage 16.12, 16.12' verkleidet bereichsweise den Nutenkörper 16.11, 16.11'. Dazu weist der Nutenkörper 16.11, 16.11' mindestens eine Auflagefläche 16.14, 16.14' auf. Die Auflagefläche 16.14, 16.14' ist parallel zur Vertikalachse Z zur Nuteneinlage 16.12, 16.12' hin ausgerichtet. Die Auflagefläche 16.14, 16.14' erstreckt sich in einer Ebene parallel zur Längsachse X und parallel zur Vertikalachse Z. Die Auflagefläche 16.14, 16.14' umfasst eine erste Auflagefläche 16.14 des ersten Nutenkörpers 16.11 und eine zweite Auflagefläche 16.14' des zweiten Nutenkörpers 16.11'.

Vorteilhafterweise verkleidet die erste Oberfläche 16.18, 16.18' der Nuteneinlage 16.12, 16.12' bereichsweise die Auflagefläche 16.14, 16.14' des Nutenkörpers 16.11, 16.11'. Die erste Oberfläche 16.18 der ersten Nuteneinlage 16.12 verkleidet die erste Auflagefläche 16.14 des ersten Nutenkörpers 16.11. Die erste Oberfläche 16.18' der zweiten Nuteneinlage 16.12' verkleidet die zweite Auflagefläche 16.14' des zweiten Nutenkörpers 16.11'. Aus Gründen der Übersichtlichkeit ist die Auflagefläche 16.14, 16.14' nur im vergrösserten Ausschnitt B2 gemäss Fig. 4 mit Bezugszeichen versehen dargestellt.

Die beiden zweiten Oberflächen 16.19, 16.19' der Nuteneinlage 16.12, 16.12' sind entlang der Querachse Y in einem Abstand zueinander angeordnet, welcher nachfolgend auch als Breite W des Nutenraums 16.3 bezeichnet wird. Die Breite W des Nutenraums 16.3 ist in Fig. 4 dargestellt.

Das Führungselement 16.2 ist aus einem mechanisch beständigen Werkstoff wie Aluminium, Stahl, Edelstahl, usw.

Das Führungselement 16.2 ist am Stössel 13 angebracht. Das Führungselement 16.2 ist drehfest mit dem Stössel 13 verbunden. Die Verbindung des Führungselementes 16.2 mit dem Stössel 13 erfolgt über geeignete Mittel wie Schrauben, Presspassung, Klebstoff, usw.

Gemäss Fig. 3 und 4 ist das Führungselement 16.2 stegförmig. Das Führungselement 16.2 ragt auf der Vertikalachse Z aus einer äusseren Begrenzungsoberfläche des Stössels 13 heraus bereichsweise in die Führungsnut 16.1. Gemäss Fig. 3 und 4 ragt das Führungselement 16.2 in den Nutenraum 16.13 der Führungsnut 16.1. Die zweite Oberfläche 16.19, 16.19' der Nuteneinlage 16.12, 16.12' ist parallel zur Vertikalachse Z zum in den Nutenraum 16.13 ragenden Führungselement 16.2 hin ausgerichtet.

Das Führungselement 16.2 ist in Wirkverbindung mit der Führungsnut 16.1. Die Wirkverbindung erfolgt über einen direkten mechanischen Kontakt C, C'. Gemäss Fig. 3 und 4 erstreckt sich der direkte mechanische Kontakt C, C' in einer Ebene parallel zur Längsachse X und parallel zur Vertikalachse Z. Der direkte mechanische Kontakt C, C' umfasst einen ersten direkten mechanischen Kontakt C und einen zweiten direkten mechanischen Kontakt C'. Mit dem ersten direkten mechanischen Kontakt C ist das Führungselement 16.2 in Wirkverbindung mit der ersten Nuteneinlage 16.12. Mit dem zweiten direkten mechanischen Kontakt C' ist das Führungselement 16.2 in Wirkverbindung mit der zweiten Nuteneinlage 16.12'.

Das Führungselement 16.2 weist mindestens eine Kontaktfläche 16.21, 16.21' auf. Die Kontaktfläche 16.21, 16.21' ist parallel zur Querachse Y zur Nuteneinlage 16.12, 16.12' hin ausgerichtet. Die Kontaktfläche 16.21, 16.21' erstreckt sich in einer Ebene parallel zur Längsachse X und parallel zur Vertikalachse Z. Die Kontaktfläche 16.21, 16.21' umfasst eine erste Kontaktfläche 16.21 und eine zweite Kontaktfläche 16.21'. Die erste Kontaktfläche 16.21 bildet den ersten direkten mechanischen Kontakt C des Führungselementes 16.2 mit der zweiten Oberfläche 16.19 der ersten Nuteneinlage 16.12. Die zweite Kontaktfläche 16.21' bildet den zweiten direkten mechanischen Kontakt C' des Führungselementes 16.2 mit der zweiten Oberfläche 6.19' der zweiten Nuteneinlage 16.12.

Vorteilhafterweise ist die Kontaktfläche 16.21, 16.21' des Führungselementes 16.2 aus einem verschleissarmen Werkstoff, welcher Werkstoff einer der folgenden ist: Eloxal (Elektrolytische Oxidation von Aluminium), Harteloxal. Bei Kenntnis der vorliegenden Erfindung kann der Fachmann auch andere bekannte verschleissarme Werkstoffe verwenden.

Eine Rotation des Stössels 13 um die Längsachse X resultiert in einem Drehmoment, welches parallel zur Querachse Y auf den direkten mechanischen Kontakt C, C' von Führungselement 16.2 und Nuteneinlage 16.12, 16.12' wirkt. Das Drehmoment wirkt vom Führungselement 16.2 über die Nuteneinlage 16.12, 16.12' auf den Nutenkörper 16.11, 16.11'. Der Nutenkörper 16.11, 16.11' wiederum, welcher ja vorteilhafterweise einstückig mit dem Gehäusekörper 14.1 ist, stützt sich auf dem Gehäusekörper 14.1 ab und wird durch ein Gegenmoment in Ruhe gehalten. Dadurch werden aber auch das Führungselement 16.2 und die Nuteneinlage 16.12, 16.12', welche im direkten mechanischen Kontakt C, C' miteinander sind, in Ruhe gehalten. Somit verhindert das im direkten mechanischen Kontakt C, C' mit der Führungsnut 16.1 stehende Führungselement 16.2 eine Rotation des Führungselementes 16.2 und somit des Stössels 13 um die Längsachse X.

Gleichzeitig ermöglicht der niedrige Reibwert des Werkstoffes der Nuteneinlage 16.12, 16.12' eine Linearbewegung Führungselementes 16.2 und somit des Stössels 13 und über die gesamte Hublänge des Fügemodules 1 entlang der Längsachse X.

Das Führungselement 16.2 ist in den Nutenraum 16.13 eingebracht. Das Einbringen des Führungselementes 16.2 in den Nutenraum 16.13 erfolgt durch Einschieben parallel zur Längsachse X, durch Einsetzen entlang der Vertikalachse Z, usw.

Das Führungselement 16.2 und die Führungsnut 16.1 sind über die gesamte Hublänge des Fügemodules 1 von mehreren 100 mm entlang der Längsachse X zueinander fluchtend angeordnet. Für einen weitgehend konstanten direkten mechanischen Kontakt C, C' des Führungselementes 16.2 in der Führungsnut 16.1 muss die Führungsnut 16.1 enge Toleranzen erfüllen. Die Toleranzen stellen sicher, dass das Führungselement 16.2 nicht in der Führungsnut 16.1 verkantet. Insbesondere bei Verwendung von zwei Führungselementen 16.2 in zwei Führungsnuten 16.1 gemäss Fig. 3 besteht eine solche Gefahr des Verkantens. Die Toleranzen werden in der zweiten Oberfläche 16.19, 16.19' der Nuteneinlage 16.12, 16.12' gemessen. Vorteilhafterweise betragen die Toleranzen in der Ebene parallel zur Längsachse X und parallel zur Vertikalachse Z kleiner/gleich 0.1 mm.

Zur Fertigung der engen Toleranzen wird die in den Nutenraum 16.13 eingelegte und mit dem Nutenkörper 16.11, 16.11' formschlüssig verbundene Nuteneinlage 16.12, 16.12' auf Toleranz bearbeitet. Die Bearbeitung auf Toleranz erfolgt, bevor das Führungselement 16.2 in den Nutenraum 16.13 eingebracht ist. Die Bearbeitung auf Toleranz erfolgt in einem Räumvorgang. Vorteilhafterweise wird dazu ein Räumwerkzeug mit mindestens einer Schneide verwendet. Das Räumwerkzeug ist figürlich nicht dargestellt.

Das Räumwerkzeug besteht aus einem hochfesten Material wie Schnellarbeitsstahl. Eine Geometrie des Räumwerkzeuges ist derart, dass eine räumliche Ausdehnung des Räumwerkzeuges entlang der Querachse Y gleich der auf Toleranz zu fertigenden Breite W zwischen den zweiten Oberflächen 16.19, 16.19' des Nutenkörpers 16.13 entlang der Querachse Y ist. Das Räumwerkzeug wird entlang der Längsachse X durch den Nutenraum 16.13 hindurchgezogen. Dabei wird das Material der Nuteneinlage 16.12, 16.12' entlang der Querachse Y mit der Scheide auf Toleranz der Breite W geschnitten.

### Bezugszeichenliste

- 1: Fügemodul
- 11: Antriebseinheit
- 12: Gewindetrieb
- 12.1: Spindel
- 12.2: Spindelmutter
- 13: Stössel
- 14: Gehäuse
- 14.1: Gehäusekörper
- 14.2: Hohlraum
- 15: Kraftaufnehmer
- 16: Drehmomentstützeinrichtung
- 16.1: Führungsnut
- 16.11, 16.11': Nutenkörper
- 16.12, 16.12': Nuteneinlage
- 16.13: Nutenraum
- 16.14, 16.14': Auflagefläche
- 16.15, 16.15': erstes Formschlusselement
- 16.16, 16.16': zweites Formschlusselement
- 16.17, 16.17': komplementäres Formschlusselement
- 16.18, 16.18': erste Oberfläche
- 16.19, 16.19': zweite Oberfläche
- 16.2: Führungselement
- 16.21, 16.21': Kontaktfläche
- A - A: Schnittverlauf
- B1: erster vergrösserter Ausschnitt
- B2: zweiter vergrösserter Ausschnitt
- C, C': direkter mechanischer Kontakt
- F: Kraft
- W: Breite
- X: Längsachse
- XY: Querebene
- Y: Querachse
- Z: Vertikalachse

## Patentansprüche

1. Fügemodul (1) mit einer Drehmomentstützeinrichtung (16); welches Fügemodul (1) eine Antriebseinheit (11), einen Gewindetrieb (12), einen Stössel (13) und ein Gehäuse (14) aufweist; welcher Gewindetrieb (12) eine Drehbewegung der Antriebseinheit (11) in eine Linearbewegung wandelt; welcher Stössel (13) am Gewindetrieb (12) angebracht ist und mit der Linearbewegung entlang einer Längsachse (X) verfahrbar ist; welche Drehmomentstützeinrichtung (16) mindestens eine Führungsnut (16.1) und mindestens ein Führungselement (16.2) aufweist; welche Führungsnut (16.1) im Gehäuse (14) angebracht ist, welches Führungselement (16.2) drehfest mit dem Stössel (13) verbunden ist und welches Führungselement (16.2) bereichsweise in die Führungsnut (16.1) ragt; **dadurch gekennzeichnet, dass** die Führungsnut (16.1) mindestens eine Nuteneinlage (16.12, 16.12') aufweist; und dass das in die Führungsnut (16.1) ragende Führungselement (16.2) in einem direkten mechanischen Kontakt (C, C') mit der Nuteneinlage (16.12, 16.12') ist, welcher direkte mechanische Kontakt (C, C') eine Rotation des Stössels (13) um die Längsachse (X) verhindert.

2. Fügemodul (1) nach Anspruch 1, **dadurch gekennzeichnet, dass** die Führungsnut (16.1) einen Nutenkörper (16.11, 16.11') aufweist; und dass die Nuteneinlage (16.12, 16.12') über einen Formschluss mit dem Nutenkörper (16.11, 16.11') verbunden ist.

3. Fügemodul (1) nach Anspruch 2, **dadurch gekennzeichnet, dass** die Nuteneinlage (16.12, 16.12') mindestens ein Formschlusselement (16.15, 16.15', 16.16, 16.16') aufweist; dass der Nutenkörper (16.11, 16.11') mindestens ein komplementäres Formschlusselement (16.17, 16.17') aufweist; und dass das komplementäre Formschlusselement (16.17, 16.17') eingerichtet ist, das Formschlusselement (16.15, 16.15', 16.16, 16.16') formschlüssig aufzunehmen.

4. Fügemodul (1) nach Anspruch 3, **dadurch gekennzeichnet, dass** die Nuteneinlage (16.12, 16.12') als T-förmiges Band ausgebildet ist, welches T-förmige Band zwei Arme aufweist, welche zwei Arme einen ersten Arm und einen zweiten Arm umfassen, welche zwei Arme sich parallel zu einer senkrecht auf der Längsachse (X) stehenden Querachse (Y) erstrecken; dass das Formschlusselement (16.15, 16.15', 16.16, 16.16') ein erstes Formschlusselement (16.15, 16.15') und ein zweites Formschlusselement (16.16, 16.16') umfasst; dass das erste Formschlusselement (16.15. 16.15') am ersten Arm ausgebildet ist; dass das zweite Formschlusselement (16.16, 16.16') am zweiten Arm ausgebildet ist; dass das komplementäre Formschlusselement (16.17, 16.17') pfannenförmig ausgebildet ist; und dass das komplementäre Formschlusselement (16.17, 16.17') eingerichtet ist, das erste Formschlusselement (16.15, 16.15') und das zweite Formschlusselement (16.16, 16.16') aufzunehmen.

5. Fügemodul (1) nach einem der Ansprüche 2 bis 4, **dadurch gekennzeichnet, dass** der Nutenkörper (16.11, 16.11') U-förmig ausgebildet ist und einen ersten Schenkel (16.11) und einen zweiten Schenkel (16.11') aufweist; und dass zwischen den beiden Schenkeln (16.11, 16.11') ein Nutenraum (16.13) angeordnet ist.

6. Fügemodul (1) nach einem der Ansprüche 2 bis 6, **dadurch gekennzeichnet, dass** die Nuteneinlage (16.12, 16.12') bereichsweise den Nutenkörper (16.11, 16.1') verkleidet.

7. Fügemodul (1) nach Anspruch 6, **dadurch gekennzeichnet, dass** die Nuteneinlage (16.12, 16.12') als T-förmiges Band ausgebildet ist, welches T-förmige Band einen Fuss aufweist, welcher Fuss eine erste Oberfläche (16.18, 16.18') aufweist, welche erste Oberfläche (16.18, 16.18') sich parallel zur Längsachse (X) und parallel zu einer senkrecht auf der Längsachse (X) und senkrecht auf der Querachse (Y) stehenden Vertikalachse (Z) erstreckt.

8. Fügemodul (1) nach Anspruch 7, **dadurch gekennzeichnet, dass** der Nutenkörper (16.11, 16.11') mindestens eine Auflagefläche (16.14, 16.14') aufweist, welche Auflagefläche (16.14, 16.14') sich parallel zur Längsachse (X) und parallel zur Vertikalachse (Z) erstreckt; und dass die erste Oberfläche (16.18, 16.18') der Nuteneinlage (16.12, 16.12') bereichsweise die Auflagefläche (16.14, 16.14') des Nutenkörpers (16.11, 16.11') verkleidet.

9. Fügemodul (1) nach einem der Ansprüche 2 bis 8, **dadurch gekennzeichnet, dass** das Gehäuse (14) einen Gehäusekörper (14.1) aufweist; und dass der Gehäusekörper (14.1) und der Nutenkörper (16.11, 16.11') einstückig ausgebildet sind.

10. Fügemodul (1) nach Anspruch 9, **dadurch gekennzeichnet, dass** der Gehäusekörper (14.1) ein Strangpressprofil aus Aluminium oder Aluminiumlegierungen ist.

11. Fügemodul (1) nach einem der Ansprüche 1 bis 10, **dadurch gekennzeichnet, dass** das Führungselement (16.2) mindestens eine Kontaktfläche (16.21, 16.21') aufweist, welche Kontaktfläche (16.21, 16.21') parallel zu einer senkrecht auf der Längsachse (X) stehenden Querachse (Y) zur Nuteneinlage (16.12, 16.12') hin ausgerichtet ist; dass die Nuteneinlage (16.12, 16.12') eine zweite Oberfläche (16.19, 16.19') aufweist, welche zweite Oberfläche (16.19, 16.19') parallel zur Querachse (Y) zum Führungselement (16.2) hin ausgerichtet ist; und dass das Führungselement (16.2) mit der Kontaktfläche (16.21, 16.21') den direkten mechanischen Kontakt (C, C') mit der zweiten Oberfläche (16.19, 16.19') der Nuteneinlage (16.12, 16.12') bildet.

12. Fügemodul (1) nach Anspruch 11, **dadurch gekennzeichnet, dass** die Kontaktfläche (16.21, 16.21') aus einem verschleissarmen Werkstoff ist, welcher Werkstoff einer der folgenden ist: Eloxal, Harteloxal.

13. Fügemodul (1) nach einem der Ansprüche 1 bis 12, **dadurch gekennzeichnet, dass** die Nuteneinlage (16.12, 16.12') aus einem Werkstoff mit niedrigem Reibwert ist, welcher Werkstoff mindestens einer der folgenden ist: Polyoxymethylen (POM), Polyethylenterephthalat (PET), Polyetheretherketon (PEEK), Polytetrafluorethylen (PTFE).

14. Verfahren zur Fertigung eines Fügemodul (1) mit einer Drehmomentstützeinrichtung (16); welches Fügemodul (1) eine Antriebseinheit (11), einen Gewindetrieb (12), einen Stössel (13) und ein Gehäuse (14) aufweist; welcher Gewindetrieb (12) eine Drehbewegung der Antriebseinheit (11) in eine Linearbewegung wandelt; welcher Stössel (13) am Gewindetrieb (12) angebracht ist und mit der Linearbewegung entlang einer Längsachse (X) verfahrbar ist; welche Drehmomentstützeinrichtung (16) mindestens eine Führungsnut (16.1) und mindestens ein Führungselement (16.2) aufweist; welche Führungsnut (16.1) im Gehäuse (14) angebracht ist, welches Führungselement (16.2) drehfest mit dem Stössel (13) verbunden ist und welches Führungselement (16.2) bereichsweise in die Führungsnut (16.1) ragt; **dadurch gekennzeichnet, dass** mindestens eine Nuteneinlage (16.12, 16.12') bereitgestellt wird; und dass die Nuteneinlage (16.12, 16.12') derart in die Führungsnut (16.1) eingelegt wird, dass das in die Führungsnut (16.1) ragende Führungselement (16.2) in einem direkten mechanischen Kontakt (C, C') mit der Nuteneinlage (16.12, 16.12') ist, welcher direkte mechanische Kontakt (C, C') eine Rotation des Stössels (13) um die Längsachse (X) verhindert.

15. Verfahren nach Anspruch 14, **dadurch gekennzeichnet, dass** die in die Führungsnut (16.1) eingelegte Nuteneinlage (16.12, 16.12') über einen Formschluss mit dem Nutenkörper (16.11, 16.11') verbunden wird.

16. Verfahren nach Anspruch 15, **dadurch gekennzeichnet, dass** die in die Führungsnut (16.1) eingelegte Nuteneinlage (16.12, 16.12') auf Toleranz bearbeitet wird.
